# FASCICULE DE BREVET EUROPEEN

(11) **EP 0 483 025 B1**
(45) Date de publication et mention de la délivrance du brevet: **31.08.1994**
(21) Numéro de dépôt: 91420370.8
(22) Date de dépôt: 21.10.1991
(51) Int. Cl.: B25J 21/02, G21F 7/053

(54) **Gant dont le volume interne est hermétiquement confiné**
Handschuh, dessen inneres hermetisch geschlossen ist
Glove whose inside volume is hermetically closed

(30) Priorité: 24.10.1990 FR 9013418
(43) Date de publication de la demande: 29.04.1992
(73) Titulaire: Gaucherot, Jacques, F-69380 Charnay (FR)
(72) Inventeur: Gaucherot, Jacques, F-69380 Charnay (FR)

(56) Documents cités:
- EP-A- 0 022 290
- DE-A- 4 001 886
- FR-A- 1 603 109
- FR-A- 2 500 355
- GB-A- 1 142 648
- US-A- 2 786 740
- US-A- 3 140 495
- US-A- 3 337 279
- US-A- 3 356 254
- US-A- 3 391 406

## Description

La présente invention concerne un dispositif permettant l'introduction d'une main gantée dans une enceinte confinée, tout en préservant ce confinement . Voir par exemple DE-A-4001886.

Les interventions manuelles devant être effectuées dans une enceinte confinée pour raisons de sécurité par exemple, sont traditionnellement réalisées en ayant recours à un ou plusieurs gants fixés sur les parois de ladite enceinte .
Les divers types de gants permettant cet accès sont généralement dissociables de l'enceinte proprement dite . La liaison assurant le maintien mécanique d'un gant sur l'enceinte et l'étanchéité du volume interne de l'enceinte par rapport à l'environnement externe, est fréquemment réalisée au moyen d'un accessoire appelé rond de gant . D'autres procédés faisant appel à des sacs de matière plastique souple pourvus d'au moins un gant sont utilisés généralement pour des applications spécifiques, confinement d'un secteur de tuyauterie par exemple . Dans le gant selon l'invention le fond permet l'évasement et l'étalement à plat du revers de gant et facilite le collage de ce revers et/ou du fond sur l'enceinte . D'autre part le fond du gant permet d'éviter la présence à l'intérieur du gant de produits résiduels, ou d'adapter ceux-ci au cours de la réalisation du gant afin qu'au moment de l'ouverture du fond de gant et par la même de la parois de l'enceinte correspondante, il n'y ait pas contamination du volume interne à l'enceinte par celui interne au gant . Le mode de jonction du gant selon l'invention, sur l'enceinte de confinement a été adapté au degré de sécurité recherché, par l'intégration d'un fond obturant hermétiquement l'extrémité du gant opposée à celle des doigts, permettant ainsi une fixation simple et économique sur un support .

Ce dispositif est constitué d'un gant permettant de protéger la main, le bras et une partie de l'avant bras . Le gant faisant partie de ce dispositif est hermétique et réalisé en une matière souple, à titre d'exemple matière plastique à base de chlorure de polyvinyle, caoutchouc de polyuréthanne, textiles enrobés, voir d'une fine feuille d'alliage d'aluminium . Les caractéristiques des matières utilisées pour l'ensemble de ce gant sont appelées ; matière souple, dans la présente description . En effet les caractéristiques propres aux matériaux constituant le présent dispositif, relèvent de conditions d'utilisation spécifiques, telles que à titre d'exemples, résistance au déchirement, résistance diélectrique, perméabilité, compatibilité avec le volume confiné, etc .

L'extrémité du gant opposée à celle des doigts est appelée manche dans la présente description . Cette manche est obturée hermétiquement par l'adjonction d'un fond rendu solidaire par collage ou soudure ou tout autres moyens similaires . Selon une variante le fond est intégré, dans ce cas le gant est constitué d'un seul et même élément . La dimension de ce fond est au moins égale à celle de la manche. La face externe de ce fond est pourvue ou permet de recevoir une substance adhésive .
L'ensemble; fond, partie appelée manche, partie appelée doigts ainsi que les collages et soudures, constitue le gant proprement dit . Un objet tranchant du type cutter par exemple se trouve situé à l'intérieur du gant constituant ainsi le dispositif . Le mélange gazeux interne au gant peut être adapté à celui dans lequel le présent dispositif permettra l'accès, à titre d'exemple, réalisation du gant sous atmosphère adaptée .

La mise en oeuvre du dispositif consiste à assembler par collage, soudure ou moyens similaires, ruban adhésif par exemple, le fond du gant ou le revers de la manche du gant sur un support, en l'occurrence sur l'une des parois d'une enceinte de confinement .

La forme du revers de manche et/ou celle du fond permet l'évasement et l'étalement à plat sur un support de cette extrémité du gant.
Selon une variante deux gants peuvent être assemblés fond sur fond .
L'intervenant retourne alors la partie des doigts à l'intérieur de la manche du gant . Une découpe à l'aide de l'objet tranchant du fond de gant et/ou de la parois de l'enceinte de confinement correspondante, sur une zone inscrite dans l'intérieur du gant, permet alors l'accès dans l'enceinte confinée en évitant sa contamination par les produits gaz ou solides résiduels contenus dans la partie du gant recevant la main, ou ceux environnant l'enceinte.

Les dessins annexés illustrent, à titre d'exemples, des modes de réalisation du dispositif conforme à la présente invention .

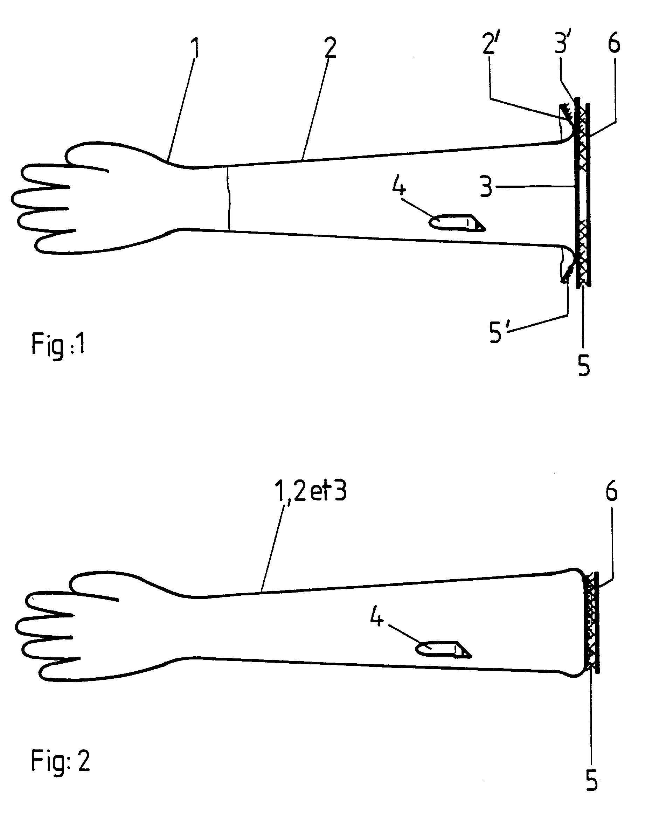

Tel qu'il est représenté fig 1, le dispositif comporte une partie appelée doigts 1, solidaire d'une partie appelée manche 2, pouvant comporter un revers 2′, elle même solidaire d'une partie appelée fond 3, pouvant comporter une partie 3′, au delà de la jonction avec la manche 2, afin de permettre un assemblage par soudure du dispositif sur un support . Le fond 3 peut être la parois de l'enceinte.
Les liaisons entre ces différentes parties sont réalisées par collage, soudures ou tout autres moyens similaires . L'ensemble est hermétique . Un objet tranchant 4, se trouve situé à l'intérieur de l'ensemble ainsi formé .
Selon une variante fig 1, la zone 2', en regard de la zone 3', du fond 3, peut être pourvue d'une substance adhésive 5′, afin de permettre sa fixation par collage sur un support .
Selon une variante fig 1, le revers 2′, de la manche 2 ou un repli de cette dernière, peut être assemblé par soudure ou à l'aide d'un ruban adhésif sur un support .

Selon une variante fig 1, la zone 3′, du fond 3, peut être assemblée à l'aide d'un ruban adhésif sur un support .

Selon une variante fig 1, ou fig 2, le fond 3 est pourvu sur sa face externe d'une substance adhésive 5, afin de permettre sa fixation sur un support .

Selon une variante fig 2, les parties 1, 2 et 3 sont constituées d'un seul et même élément .

Selon une variante, le fond 3 est percé d'un trou débouchant dans le volume interne du gant, afin de faciliter la réalisation du gant et/ou la mise en place de l'objet tranchant 4, une protection 6, de la substance adhésive 5, garantie alors l'étanchéité du gant.

Selon une variante, une protection 6 de la substance adhésive 5′, peut faire fonction de fond en assurant l'étanchéité du gant.

Selon une variante, le fond 3, et/ou la protection 6, est percé d'un trou débouchant dans le volume interne du gant, le support sur lequel sera fixé le dispositif et le mode de fixation, assurant alors le confinement du volume interne du gant.

Le dispositif objet de l'invention, peut être utilisé dans les cas où pour raisons d'hygiène, de propreté, de sécurité, ou pour toutes autres raisons, il est nécessaire d'intervenir manuellement à l'intérieur d'une enceinte confinée sans altérer les propriétés de celle-ci ou de l'environnement et sans engendrer de risques pour l'intervenant, compte tenu des moyens de liaison gant/enceinte retenus . Exemples d'applications sur enceintes de confinement réalisées au moyen de films plastique dans les sites nucléaires, l'industrie chimique, les industries ayant recours à des zones propres, la protection civile .

Le fond de gant peut être par exemple constitué d'une fine feuille d'alliage d'aluminium, de matière plastique, ou cartonné offrant ainsi une rigidité facilitant la mise en place et le collage du gant sur l'enceinte ou sur un support.

La protection de la substance adhésive peut être par exemple du type autocollante, elle serai alors retirée juste avant de coller le gant sur l'enceinte ou sur un support.

La fig 1 représente le dispositif sous une forme technique, afin de faciliter son conditionnement celle-ci peut être rendue plus compacte en minimisant le volume interne par retournement de la partie doigts et d'une partie de la manche sur elle même.

## Revendications

1. Dispositif permettant d'introduire une main gantée dans une enceinte confinée tout en préservant ce confinement et en protégeant la main, le bras et une partie de l'avant bras de l'intervenant, la fixation et par la même la mise en oeuvre de ce dispositif est réalisable, sur une enceinte garantissant déjà un confinement, ceci, tout en évitant la contamination du mélange gazeux confiné dans l'enceinte par l'environnement de celle-ci ou inversement, caractérisé par le fait que dans ce dispositif la fixation du gant sur l'enceinte est réalisée par collage de la face externe du fond (3), l'accès à l'intérieur de l'enceinte est rendu possible après une découpe à l'aide de l'objet tranchant (4), initialement contenu dans le gant, du fond de gant et de la paroi correspondante de l'enceinte.

2. Dispositif selon la revendication 1 caractérisé par le fait que ce gant est constitué de différentes parties réalisées avec des matériaux souples et assemblées entre elles de façon étanche, une partie doigts (1), une manche (2) et un fond (3) obturant la manche et permettant de ce fait un confinement hermétique du volume interne du gant.

3. Dispositif selon la revendication 1 et la revendication 2 caractérisé par le fait que la forme du revers de manche (2') et/ou celle du fond (3) obturant la manche, permet l'évasement et l'étalement à plat sur un support de cette extrémité du gant.

4. Dispositif selon les revendications 1, 2, et 3 caractérisé par le fait que les différentes parties, doigts (1), manche (2) et fond (3), peuvent être constituées d'un seul et même élément.

5. Dispositif selon les revendications 1, 2 et 3 ou la revendication 4 caractérisé par le fait que le mélange gazeux confiné dans le gant peut être adapté à celui de l'enceinte dans laquelle le présent dispositif permettra l'accès .

6. Dispositif selon les revendications 1, 2, 3, 4 et 5 caractérisé par le fait que préalablement à la fixation du dispositif sur un support, une substance adhésive (5) est déposée sur la face externe du fond (3) obturant la manche, une protection (6) peut alors protéger cet adhésif.

7. Dispositif selon les revendications 1, 3 et 5 caractérisé par le fait que préalablement à la fixation du dispositif sur un support faisant office de fond (3), une substance adhésive (5') sera déposée sur le revers (2') de la manche (2), une protection (6) peut alors protéger cet adhésif, la substance adhésive doit permettre le confinement du volume interne du gant une fois celui-ci fixé sur ce support.

8. Dispositif selon les revendications 1, 2, 3, 4 et 5 caractérisé par le fait que le dispositif peut être fixé sur un support à l'aide d'un ruban adhésif ou d'une soudure assemblant le revers de manche (2') ou la zone (3') du fond sur ce support, l'étanchéité de l'assemblage devant alors assurer le confinement du volume interne du gant.

9. Dispositif selon la revendication 1 ou l'une quelconque des revendications précédentes et afin de faciliter la mise en oeuvre de ce dispositif, caractérisé par le fait qu'un objet tranchant (4) se trouve situé à l'intérieur du gant .

10. Dispositif selon les revendications précédentes prises dans leur ensemble, caractérisé par le fait que le fond (3) est percé d'un trou débouchant dans le volume interne du gant, afin de faciliter la réalisation du gant et/ou la mise en place de l'objet tranchant (4), le confinement du volume interne du gant est alors assuré par la protection (6) ou la face du support sur lequel le gant est fixé .

## Claims

1. Device enabling the introduction of a gloved hand into a sealed chamber whilst at the same time preserving the integrity of the seal and protecting the hand, the arm and a part of the forearm of the operator. The fixing and implementation of this device being feasible on an already sealed chamber, with no risk of the gaseous mixture confined in the chamber being contaminated by the environment of the glove or vice-versa, is characterised by the fact that with this device, the attachment of the glove is effected by gluing of the external face of the end (3), access to the interior of the chamber is made possible after cutting an access hole with the aid of the cutting tool (4), initially contained in the glove, at the end of the glove and on the corresponding side of the chamber.

2. Device corresponding to feature 1 but characterised by the fact that this glove is constituted of different parts made from supple materials, a hand part (1), a sleeve (2) and an end (3), assembled in such a way that the sleeve is obscured thus providing a hermetic seal of the internal volume of the glove.

3. Device corresponding to feature 1 and feature 2 but characterised by the fact that the form of the cuff (2') and/or that of the end (3) obscuring the sleeve, permits the opening out and the laying out flat on a surface of this extremity of the glove.

4. Device corresponding to features 1, 2 and 3 characterised by the fact that the different parts, hand (1), sleeve (2) and end (3), can be made up in one and the same unit.

5. Device corresponding to features 1, 2 and 3 or feature 4 characterised by the fact that the gaseous mixture confined in the glove can be matched to that within the chamber to which this device provides access.

6. Device corresponding to features 1, 2, 3, 4 and 5 characterised by the fact that prior to fixing the device to a surface, an adhesive substance (5) is deposited on the external face of the end (3) obscuring the sleeve, a protector (6) covers this adhesive.

7. Device corresponding to features 1, 3 and 5 characterised by the fact that prior to fixing the device to a surface making use of the end (3), an adhesive substance (5') will be deposited on the cuff (2') of the sleeve (2), a protector (6) can the cover this adhesive, the adhesive substance must ensure confinement of the internal volume of the glove once it is fixed to the surface.

8. Device corresponding to features 1, 2, 3, 4, and 5 characterised by the fact that the device can be fixed to a surface with adhesive tape or a weld, assembling the sleeve cuff (2') or the area (3') of the end to the support, the sealing quality of the assembly must ensure confinement of the internal volume of the glove.

9. Device corresponding to feature 1 or any other of the preceding features and, in order to facilitate implementation of the device, characterised by the fact that a cutting tool (4) is to be found inside the glove.

10. Device corresponding to the preceding features taken as a whole, characterised by the fact that the end (3) has an access hole leading to the inside of the glove in order to simplify the assembly of the glove and/or the insertion of a cutting tool (4), the sealing of the internal volume of the glove is ensured by the protector (6) or the face of the surface to which the glove is fixed.

## Patentansprüche

1. Vorrichtung, die es ermöglicht, eine behandschuhte Hand in ein Containment zu stecken und gleichzeitig diese Einschließung zu bewahren und die Hand, den Arm und einen Teil des Unterarms des Eingreifenden zu schützen. Die Befestigung und dadurch die Benutzung dieser Vorrichtung sind möglich an einem Containement, das bereits eine Einschließung gewährleistet und gleichzeitig die Verseuchung des im Containment eingeschlossenen Gasgemischs durch die es umgebende Umwelt vermieden wird oder umgekehrt ist die Befestigung des Handschuhs an dem Containment möglich durch Ankleben der Außenseite des Bodens (3); der Zugang zum Innern des Containments wird durch Ausschneiden des Handschuhbodens und der entsprechenden Wand des Containments mit Hilfe eines Schneidgegenstandes (4) möglich gemacht, der von Beginn an im Handschuh enthalten ist.

2. Vorrichtung gemäß Anspruch 1, die sich dadurch auszeichnet, daß dieser Handschuh aus verschiedenen Teilen besteht, die aus weichen Materialien hergestellt sind und dicht zusammengefügt sind, ein Teil Finger (1), ein Ärmel (2) und ein Boden (3), der den Ärmel verschließt und so ein hermetisches Einschließen des Handschuhinnenraums ermöglicht.

3. Vorrichtung gemäß Anspruch 1 und Anspruch 2, die sich dadurch auszeichnet, daß die Form des Ärmelumschlags (2') und/oder des Bodens (3), der den Ärmel verschließt, die Ausweitung und das flache Verteilen dieses Handschuhendes auf einem Untergrund ermöglicht.

4. Vorrichtung gemäß den Ansprüchen 1,2 und 3, die sich dadurch auszeichnet, daß die einzelnen Teile, Finger (1), Ärmel (2) und Boden (3) ein einziges Element bilden.

5. Vorrichtung gemäß den Ansprüchen 1,2 und 3 oder dem Anspruch 4, die sich dadurch auszeichnet, daß das im Handschuh eingeschlossene Gasgemisch dem des Containments, zu dem die vorliegende Vorrichtung Zugang gewährt, angepaßt werden kann.

6. Vorrichtung gemäß den Ansprüchen 1,2,3,4 und 5, die sich dadurch auszeichnet, daß vor dem Befestigen der Vorrichtung auf einer Unterlage ein Klebstoff (5) auf der Außenseite des Bodens (3), der den Ärmel verschließt, angebracht wird. Eine Schutzvorrichtung (6) kann also diesen Kleber schützen.

7. Vorrichtung gemäß den Ansprüchen 1,3 und 5, die sich dadurch auszeichnet, daß vor dem Befestigen der Vorrichtung auf einer Unterlage, die als Boden (3) dient, ein Klebstoff (5') auf dem Umschlag ((2') des Ärmels (2) angebracht wird. Eine Schutzvorrichtung (6) kann also diesen Kleber schützen. Der Klebstoff muß die Einschließung des Handschuhinnenraumes ermöglichen, sobald der Handschuh auf der Unterlage befestigt ist.

8. Vorrichtung gemaß den Ansprüchen 1,2,3,4 und 5, die sich dadurch auszeichnet, daß die Vorrichtung mit Hilfe eines Klebebandes oder einer Schweißnaht auf der Unterlage befestigt werden kann und so den Ärmelumschlag (2') oder die Zone (3') des Bodens auf dieser Unterlage zusammenfügt, wobei die Dichtheit der zusammengefügten Teile die Einschließung des Hanschuhinnenraums sichern muß.

9. Vorrichtung gemaß dem Anspruch 1 oder irgendeinem anderen der vorangegangenen Ansprüche und zur Erleichterung der Benutzung dieser Vorrichtung, die sich dadurch auszeichnet, daß sich ein Schneidgegenstand im Innern des Handschuhs befindet.

10. Vorrichtung gemäß den gesamten vorangegangenen Ansprüchen, die sich dadurch auszeichnet, daß der Boden (3) ein Loch hat, durch das man in den Innenraum des Handschuhs gelangt, um die Durchführung des Handschuhs und/oder das Instellungbringen des Schneidgegenstandes (4) zu erleichtern. Die Einschließung des Handschuhinnenraums ist also durch die Schutzvorrichtung (6) oder die Seite der Unterlage, auf dem der Handschuh befestigt ist, gesichert.
